(19) Europäisches Patentamt
European Patent Office
Office européen des brevets

(11) **EP 3 988 330 B1**

(12) **EUROPEAN PATENT SPECIFICATION**

(45) Date of publication and mention
of the grant of the patent:
**01.05.2024 Bulletin 2024/18**

(21) Application number: **20827207.0**

(22) Date of filing: **18.06.2020**

(51) International Patent Classification (IPC):
*B60C 11/00* ^(2006.01)     *B60C 11/03* ^(2006.01)

(52) Cooperative Patent Classification (CPC):
**B60C 11/0332; B60C 11/0008; B60C 11/005;**
B60C 2011/0025; B60C 2011/0033; Y02T 10/86

(86) International application number:
**PCT/JP2020/024035**

(87) International publication number:
**WO 2020/256083 (24.12.2020 Gazette 2020/52)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2019 JP 2019114834**

(43) Date of publication of application:
**27.04.2022 Bulletin 2022/17**

(73) Proprietor: **BRIDGESTONE CORPORATION
Chuo-ku
Tokyo 104-8340 (JP)**

(72) Inventor: **KAWASHIMA Keisuke
Tokyo 104-8340 (JP)**

(74) Representative: **Marks & Clerk LLP
15 Fetter Lane
London EC4A 1BW (GB)**

(56) References cited:
EP-A1- 2 698 262     EP-A1- 3 812 174
WO-A1-2016/098505     WO-A1-2018/003526
WO-A1-2019/039175     JP-A- H01 174 547
JP-A- 2017 218 496     JP-A- 2018 083 944
JP-A- 2018 145 272     JP-A- 2018 150 419
US-A1- 2008 097 024     US-A1- 2008 097 024

**Description**

TECHNICAL FIELD

The present invention relates to a tire.

BACKGROUND

There are known techniques that optimize rubber members (base rubbers) forming base portions of tire treads in order to improve the fuel efficiency of vehicles (i.e. achieve higher fuel efficiency).

For example, JP 2016-6135 A (PTL 1) discloses a technique of using, in a base rubber, a rubber composition having improved (lower) heat generating property (i.e. reduced $\tan\delta$) as a result of adjusting rubber components and fillers. Attention is also drawn to the disclosures of EP3812174A1, EP2698262A1, US2008/097024A1 and WO2019/039175A1.

In the case where $\tan\delta$ (loss tangent) of the rubber composition is reduced as in the base rubber disclosed in PTL 1, the rolling resistance is low (i.e. excellent rolling resistance) and the fuel efficiency can be improved, but noise (pass-by noise) generated from the tire during vehicle passing worsens.

There is thus a demand to develop a tire having excellent rolling resistance and improved pass-by noise performance.

CITATION LIST

Patent Literature

PTL 1: JP 2016-6135 A

SUMMARY

(Technical Problem)

It could therefore be helpful to provide a tire having excellent rolling resistance and improved pass-by noise performance.

(Solution to Problem)

We provide the following:
A tire according to the present invention is a tire as claimed in claim 1.

With this structure, the rolling resistance and the pass-by noise performance can be improved.

Preferably, in the tire according to the present invention, the ratio 0 °C $\tan\delta$/30 °C $\tan\delta$ is 3.00 or more. Both the rolling resistance and the pass-by noise performance can thus be improved at higher level.

Preferably, in the tire according to the present invention, the 30 °C $\tan\delta$ is 0.075 or more. The pass-by noise performance of the tire can thus be further improved.

Preferably, in the tire according to the present invention, the 0 °C $\tan\delta$ is 0.200 to 0.625. Both the rolling resistance and the pass-by noise performance can thus be improved at higher level.

Preferably, in the tire according to the present invention, the thickness of the base rubber in the tire radial direction is greater in a center portion than in an outer side portion in a tire width direction. The pass-by noise performance can thus be further improved.

In the tire according to the present invention, a rectangular rate of a contact patch shape when the tire is attached to an applicable rim, filled to a prescribed internal pressure, and placed under a maximum load in a state in which a tire rotation axis is parallel to a contact patch is 70 % to 95 %. The rolling resistance can thus be further improved while maintaining the wear resistance.

(Advantageous Effect)

It is therefore possible to provide a tire having excellent rolling resistance and improved pass-by noise performance.

BRIEF DESCRIPTION OF THE DRAWINGS

In the accompanying drawings:

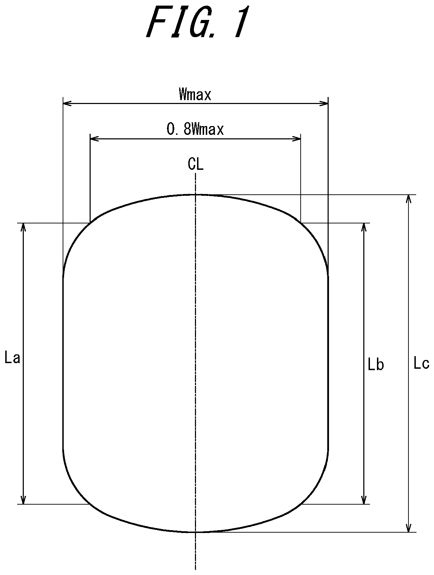

FIG. 1 is a plan view illustrating a contact patch shape of a tire for explaining a rectangular rate.

DETAILED DESCRIPTION

A tire according to the present invention will be described in detail below by way of embodiments.

The tire according to the present invention is a tire comprising a tread portion that includes a base rubber and a cap rubber located on an outer side of the base rubber in a tire radial direction.

In the tire according to the present invention, a thickness of the base rubber in the tire radial direction is 1 mm or more, 30 °C tan$\delta$ of the base rubber is 0.20 or less, and a ratio (0 °C tan$\delta$/30 °C tan$\delta$) of 0 °C tan$\delta$ to 30 °C tan$\delta$ of the base rubber is 2.90 or more, where 30 °C tan$\delta$ is tan$\delta$ at 10 Hz and 30 °C, and 0 °C tan$\delta$ is tan$\delta$ at 10 Hz and 0 °C.

Typically, in the case where tan$\delta$ of a rubber used in a tread portion of a tire is reduced, the rolling resistance of the tire can be improved, but the pass-by noise level worsens. Meanwhile, in the case where tan$\delta$ of the rubber used in the tread portion of the tire is increased or the thickness of a base rubber included in the tread portion of the tire is increased, the pass-by noise level can be reduced, but the rolling resistance worsens.

In view of this, in addition to limiting the thickness of the base rubber in the tread portion of the tire to the predetermined range, we looked at the frequency domain (about 1000 Hz to 2000 Hz) of tan$\delta$ influencing the pass-by noise performance and the frequency domain (about 10 Hz to 20 Hz) of tan$\delta$ influencing the rolling resistance. We then learned that decreasing low-frequency tan$\delta$ tends to improve the rolling resistance of the tire, and increasing high-frequency tan$\delta$ contributes to improved pass-by noise performance.

Given that it is difficult to identify viscoelasticity at high frequency, we discovered that, by converting tan$\delta$ at 1000 Hz and 30 °C into tan$\delta$ at 10 Hz and 0 °C for the base rubber by temperature frequency conversion (WLF rule) and optimizing the frequency dependence of the rolling resistance and the pass-by noise performance (specifically, setting the ratio (0 °C tan$\delta$/30 °C tan$\delta$) of tan$\delta$ at 10 Hz and 0 °C to tan$\delta$ at 10 Hz and 30 °C to a high ratio of 2.90 or more), the pass-by noise performance can be improved while ensuring excellent rolling resistance.

0 °C tan$\delta$/30 °C tan$\delta$ of the base rubber needs to be 2.90 or more. If 0 °C tan$\delta$/30 °C tan$\delta$ is less than 2.90, the frequency dependence of the rolling resistance and the pass-by noise performance cannot be optimized sufficiently, and therefore it is impossible to achieve both improvement of rolling resistance and reduction of pass-by noise.

From the same viewpoint, 0 °C tan$\delta$/30 °C tan$\delta$ is preferably 3.00 or more, and more preferably 3.1 or more. If 0 °C tan$\delta$/30 °C tan$\delta$ is excessively high, the rolling resistance cannot be reduced sufficiently. 0 °C tan$\delta$/30 °C tan$\delta$ is therefore preferably 6.0 or less.

0 °C tan$\delta$ and 30 °C tan$\delta$ of the base rubber can be measured using a spectrometer produced by Ueshima Seisakusho Co., Ltd. The measurement method is, however, not limited as long as accurate values of 0 °C tan$\delta$ and 30 °C tan$\delta$ are obtained, and 0 °C tan$\delta$ and 30 °C tan$\delta$ may be measured using a typical measurement device.

30 °C tan$\delta$ of the base rubber is not limited as long as the foregoing relationship of 0 °C tan$\delta$/30 °C tan$\delta$ is satisfied. For example, 30 °C tan$\delta$ of the base rubber is preferably 0.075 or more and more preferably 0.10 or more, from the viewpoint of further improving the pass-by noise performance of the tire. 30 °C tan$\delta$ of the base rubber is preferably 0.220 or less and more preferably 0.017 or less, from the viewpoint of further improving the rolling resistance of the tire.

0 °C tan$\delta$ of the base rubber is not limited as long as the foregoing relationship of 0 °C tan$\delta$/30 °C tan$\delta$ is satisfied. For example, 0 °C tan$\delta$ of the base rubber is preferably 0.200 or more and more preferably 0.300 or more, from the viewpoint of further improving the pass-by noise performance of the tire. 0 °C tan$\delta$ of the base rubber is preferably 0.625 or less and more preferably 0.500 or less, from the viewpoint of further improving the rolling resistance of the tire. Thus, 0 °C tan$\delta$ is preferably 0.200 to 0.625 in order to improve both the rolling resistance and the pass-by noise performance at higher level.

The method of adjusting each of the value of 0 °C tan$\delta$/30 °C tan$\delta$, the value of 0 °C tan$\delta$, and the value of 30 °C tan$\delta$ of the base rubber is not limited. For example, a method of optimizing the components of the rubber composition forming the base rubber (hereafter also referred to as "rubber composition for base rubber") may be used. The value of 0 °C tan$\delta$/30 °C tan$\delta$, the value of 0 °C tan$\delta$, and the value of 30 °C tan$\delta$ can each be set to the range defined in the present invention by adjusting the types and contents of rubber components and/or the types and contents of fillers, as described later.

The thickness of the base rubber in the tire radial direction needs to be 1 mm or more, and is preferably 2 mm or more. The pass-by noise performance of the tire can thus be further improved. Herein, the thickness of the base rubber in the tire radial direction is the thickness of the thickest part of the base rubber.

The thickness of the base rubber in the tire radial direction is preferably different between a center portion and an outer side portion in the tire width direction. More preferably, the center portion in the tire width direction is thicker than the outer side portion in the tire width direction. In this way, the pass-by noise performance of the tire can be further improved.

The components forming the rubber composition for base rubber are not limited as long as the base rubber satisfies the foregoing relationship of 0 °C tan$\delta$/30 °C tan$\delta$. The types and contents of the rubber components and fillers may be adjusted as appropriate depending on the performance required of the base rubber.

The rubber components in the rubber composition for base rubber are not limited, but preferably contain styrene butadiene rubber (SBR) whose styrene content is 26 mass% or more from the viewpoint of easily satisfying the foregoing relationship of 0 °C tan$\delta$/30 °C tan$\delta$ and improving both the rolling resistance and the pass-by noise performance of the tire at higher level when used in the base rubber. From the same viewpoint, the styrene content in SBR is more preferably 39 mass% or more.

The styrene content in SBR can be calculated based on the integral ratio of $^1$H-NMR spectra.

The content of SBR in the rubber components is preferably 10 mass% to 80 mass%, more preferably 15 mass% to 70 mass%, and further preferably 15 mass% to 60 mass%, from the viewpoint of improving both the rolling resistance and the pass-by noise performance of the tire at higher level when used in the base rubber. As a result of the content of SBR in the rubber components being 10 mass% or more, the foregoing relationship of 0 °C tan$\delta$/30 °C tan$\delta$ can be easily satisfied and both the rolling resistance and the pass-by noise performance of the tire can be improved at higher level when used in the base rubber.

The rubber components preferably further contain natural rubber (NR) in addition to SBR. Thus, the foregoing relationship of 0 °C tan$\delta$/30 °C tan$\delta$ can be easily satisfied, and both the rolling resistance and the pass-by noise performance of the tire can be improved at higher level.

The rubber components preferably further contain butadiene rubber (BR) in addition to SBR and NR. Thus, the foregoing relationship of 0 °C tan$\delta$/30 °C tan$\delta$ can be easily satisfied, and both the rolling resistance and the pass-by noise performance of the tire can be improved at higher level when used in the base rubber.

The rubber components preferably contain 10 mass% to 75 mass% of NR, 10 mass% to 75 mass% of BR, and 15 mass% to 60 mass% of SBR, from the viewpoint of more reliably improving both the rolling resistance and the pass-by noise performance of the tire when used in the base rubber.

Here, SBR, NR, and BR may be modified or unmodified.

The rubber components may contain other rubbers (other rubber components) besides the foregoing SBR, NR, and BR, depending on the required performance. Examples of the other rubber components include diene-based rubbers such as isoprene rubber (IR), styrene isoprene butadiene rubber (SIBR), chloroprene rubber (CR), and acrylonitrile butadiene rubber (NBR), and non-diene-based rubbers such as ethylene propylene diene rubber (EPDM), ethylene propylene rubber (EPM), and butyl rubber (IIR).

Whether the rubber composition for base rubber contains fillers, the contents and types of fillers, and the like are not limited, and may be changed as appropriate depending on the required performance.

Examples of fillers that may be contained include carbon black, silica, and other inorganic fillers.

The type of carbon black is not limited, and may be selected as appropriate depending on the required performance. Examples of carbon black that may be contained include FEF, SRF, HAF, ISAF, and SAF grade carbon blacks.

The content of carbon black in the rubber composition for base rubber is preferably 25 parts to 65 parts by mass and more preferably 30 parts to 45 parts by mass, with respect to 100 parts by mass of the rubber components. As a result of the content of carbon black being 25 parts by mass or more with respect to 100 parts by mass of the rubber components, higher reinforcement and crack propagation resistance can be achieved. As a result of the content of carbon black being 65 parts by mass or less with respect to 100 parts by mass of the rubber components, degradation in low heat generating property can be suppressed.

Examples of types of silica include wet silica, colloidal silica, calcium silicate, and aluminum silicate.

Of these, wet silica is preferable, and precipitated silica is more preferable. These silicas have high dispersibility, and can reduce the rolling resistance of the tire. Precipitated silica is silica obtained by allowing a reaction solution to react in a relatively high temperature and neutral to alkaline pH region in the initial stage of production to grow silica primary particles and then controlling the reaction solution to the acidic side to aggregate the primary particles.

In the case where the rubber composition for base rubber contains silica, the content of silica is preferably 1 part to 60 parts by mass with respect to 100 parts by mass of the rubber components. As a result of the content of silica being 1 part by mass or more with respect to 100 parts by mass of the rubber components, the reinforcement can be improved and the rolling resistance can be further reduced. As a result of the content of silica being 60 parts by mass or less, degradation in processability can be suppressed.

Examples of the other inorganic fillers include alumina ($Al_2O_3$) such as $\gamma$-alumina and $\alpha$-alumina, alumina monohydrate ($Al_2O_3 \cdot H_2O$) such as boehmite and diaspore, aluminum hydroxide [$Al(OH)_3$] such as gibbsite and bayerite, aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium Oxide (CaO), calcium hydroxide [$Ca(OH)_2$], aluminum magnesium oxide ($MgO \cdot Al_2O_3$), clay ($Al_2O_3 \cdot 2SiO_2$), kaolin

($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2SiO_4$, etc.), aluminum calcium silicate ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicate salts containing charge-correcting hydrogen, alkali metal, or alkaline earth metal such as various types of zeolite.

The rubber composition for base rubber may further contain resin.

Examples of the resin include C5-based resin, C5/C9-based resin, C9-based resin, phenol resin, terpene-based resin, and terpene-aromatic compound-based resin. These resins may be used alone or in combination of two or more.

The rubber composition for base rubber may contain other components besides the foregoing rubber components, fillers, resins, etc. to such an extent that will not impair the effects according to the present invention.

Examples of the other components include additives commonly used in the rubber industry, such as a silane coupling agent, a softener, stearic acid, an age resistor, a vulcanizing agent (sulfur, etc.), a vulcanization accelerator, and a vulcanization acceleration aid.

In the case where the rubber composition for base rubber contains silica as a filler, the rubber composition for base rubber preferably further contains a silane coupling agent. This further improves the effect of reinforcement and rolling resistance reduction by silica. A known silane coupling agent may be used as appropriate.

The age resistor is not limited, and may be a known age resistor. Examples include a phenol-based age resistor, an imidazole-based age resistor, and an amine-based age resistor. One or more of these age resistors may be used.

The vulcanization accelerator is not limited, and may be a known vulcanization accelerator. Examples include thiazole-based vulcanization accelerators such as 2-mercaptobenzothiazole, dibenzothiazyl disulfide, and di-2-benzothiazolyl disulfide; sulfenamide-based vulcanization accelerators such as N-cyclohexyl-2-benzothiazyl sulfenamide and N-t-butyl-2-benzothiazyl sulfenamide; guanidine-based vulcanization accelerators such as diphenyl guanidine (1,3-diphenyl guanidine, etc.); thiuram-based vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate-based vulcanization accelerators such as zinc dimethyldithiocarbamate; and zinc dialkyldithio phosphate.

Examples of the vulcanization acceleration aid include zinc oxide (ZnO) and a fatty acid. The fatty acid may be any of saturated, unsaturated, linear, and branched fatty acids. The carbon number of the fatty acid is not limited. For example, a fatty acid with a carbon number of 1 to 30 may be used, and a fatty acid with a carbon number of 15 to 30 is preferable. More specific examples include naphthenic acids such as cyclohexanoic acid (cyclohexanecarboxylic acid) and alkylcyclopentane having a side chain; saturated fatty acids such as hexanoic acid, octanoic acid, decanoic acid (including a branched carboxylic acid such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; and resin acids such as rosin, toll oil acid, and abietic acid. These fatty acids may be used alone or in combination of two or more. In the present invention, zinc oxide and stearic acid can be suitably used.

The structure of the cap rubber located on the outer side of the base rubber in the tire radial direction in the tread portion of the tire according to the present invention is not limited, and a known cap rubber may be used as appropriate depending on the performance required of the tire.

The rubber composition forming the cap rubber (hereafter also referred to as "rubber composition for cap rubber") may contain, for example, rubber components, a reinforcing filler, a softener, and additives commonly used in the rubber industry.

The tire according to the present invention is preferably a pneumatic tire. The pneumatic tire may be filled with ordinary air or air with an adjusted partial pressure of oxygen, or may be filled with an inert gas such as nitrogen, argon, or helium.

The rectangular rate of the contact patch shape of the tread portion when the tire according to the present invention is attached to an applicable rim, filled to a prescribed internal pressure, and placed under a maximum load in a state in which the tire rotation axis is parallel to the contact patch is 70 % to 95 %, and preferably 80 % to 90 %. As a result of the rectangular rate being 70 % or more, favorable wear resistance can be maintained. As a result of the rectangular rate being 95 % or less, the rolling resistance can be further improved.

The rectangular rate of the contact patch shape of the tread portion is calculated according to the following equation:

rectangular rate of contact patch shape (%) $= 100 \times ((La + Lb)/2)/Lc$

where Lc is the contact patch length in the part corresponding to the tire equatorial plane CL and La and Lb are the contact patch lengths at the left and right positions of 80 % of the contact patch shape maximum width Wmax with respect to the tire equatorial plane CL when the pneumatic tire is attached to an approved rim, filled to an approved air pressure, and grounded under a maximum load (maximum load capability) in a state in which the tire rotation axis is parallel to the road surface, as illustrated in FIG. 1.

The rectangular rate may be changed as appropriate depending on, for example, the curvature of the outer surface of the tread portion in a sectional view of the pneumatic tire along the rotation axis, the thickness distribution of the tread rubber, and the belt structure or width.

Herein, the "applicable rim" is an approved rim ("measuring rim" in ETRTO Standards Manual, "design rim" in TRA Year Book) in applicable size that is described or will be described in the future in an effective industrial standard in areas where tires are produced or used, such as JATMA (Japan Automobile Tyre Manufacturers Association) Year Book in Japan, ETRTO (European Tyre and Rim Technical Organisation) Standards Manual in Europe, or TRA (Tire and Rim Association, Inc.) Year Book in the United States (The "applicable rim" thus includes not only current size but also a size that may be included in the industrial standard in the future. An example of the "size that will be described in the future" is the size described as "future developments" in ETRTO 2013 edition). In the case of a size not described in the industrial standard, the "applicable rim" refers to a rim whose width corresponds to the bead width of the tire.

The "prescribed internal pressure" is the air pressure (maximum air pressure) corresponding to the maximum load capability of a single wheel in applicable size/ply rating that is described in JATMA Year Book, etc. In the case of a size not described in the aforementioned industrial standard, the "prescribed internal pressure" denotes the air pressure (maximum air pressure) corresponding to the maximum load capability defined for each vehicle on which the tire is to be mounted. The "maximum load" is the load corresponding to the maximum load capability.

The tire according to the present invention may be used as a tire for any of various types of vehicles, but is preferably used as a passenger vehicle tire or a truck/bus tire. These vehicles are highly required to achieve both rolling resistance reduction and pass-by noise improvement, and benefit from using the tire according to the present invention.

EXAMPLES

The presently disclosed techniques will be described in more detail below by way of examples, although the present invention is not limited to the following examples.

<Examples 1 to 2, Comparative Examples 1 to 2>

Rubber compositions for base rubber A to C were produced using a typical Banbury mixer according to the formulations shown in Table 1. The blending amount of each component in Table 1 is expressed in parts by mass with respect to 100 parts by mass of the rubber components.

The obtained rubber compositions for base rubber A to C were vulcanized at 160 °C for 15 min. For each of the resultant vulcanized rubbers, loss tangent (tan$\delta$) at 0 °C and 30 °C were measured under the conditions of an initial strain of 2 %, a dynamic strain of 1 %, and a frequency of 10 Hz using a spectrometer produced by Ueshima Seisakusho Co., Ltd. The measured tan$\delta$ at 0 °C and 30 °C and the calculated 0 °C tan$\delta$/30 °C tan$\delta$ are shown in Table 2.

[Table 1]

| Rubber composition for base rubber | A | B | C |
|---|---|---|---|
| Natural rubber | 85 | 15.2 | 55 |
| Butadiene rubber *1 | 15 | - | 15 |
| Styrene butadiene rubber 1 *2 | - | 48.6 | - |
| Styrene butadiene rubber 2 *3 | - | - | 30(41.25) |
| Styrene butadiene rubber 3 *4 | - | 36.2(49.8) | - |
| Carbon black 1 *5 | 40 | - | 40 |
| Carbon black 2 *6 | - | 54 | - |
| Stearic acid | 2 | 2 | 2 |
| Age resistor *7 | 1 | 1 | 1 |
| Zinc oxide *8 | 1 | 1 | 1 |
| Vulcanization accelerator *9 | 0.5 | 0.5 | 0.5 |

(continued)

| Rubber composition for base rubber | A | B | C |
|---|---|---|---|
| Sulfur | 0.5 | 0.5 | 0.5 |

*1: "BR01" produced by JSR Corporation.
*2: "SL563" produced by JSR Corporation, styrene content: 20 mass%.
*3: "HP755B" produced by JSR Corporation, styrene content: 40 mass%. The value in the parentheses in Table 1 is the blending amount (parts by mass) as oil extended rubber containing extender oil.
*4: "0122" produced by JSR Corporation, styrene content: 38 mass%. The value in the parentheses in Table 1 is the blending amount (parts by mass) as oil extended rubber containing extender oil.
*5: "Asahi #65" produced by Asahi Carbon Co., Ltd.
*6: "Asahi #70" produced by Asahi Carbon Co., Ltd.
*7: N-(1,3-dimethylbutyl)-N'-phenyl-p-phenylenediamine, "NOCRAC 6C" produced by Ouchi Shinko Chemical Industrial Co., Ltd.
*8: "HAKUSUITECH" produced by Kyushu Hakusui Corporation.
*9: dibenzothiazyl disulfide, "NOCCELER DM-P" produced by Ouchi Shinko Chemical Industrial Co., Ltd.

Subsequently, samples of passenger vehicle pneumatic radial tires of 195/65R15 in size were produced using, in the base rubbers of their tread portions, the obtained rubber compositions for base rubber. The conditions of the tread portion other than the conditions of the base rubber shown in Table 2 were the same in all samples.

<Evaluation>

The obtained tire samples were evaluated by the following methods. The results are shown in Table 2.

(1) Rolling resistance

For each tire sample, the rolling resistance coefficient (RRC) was measured in accordance with international standards (ECE R117).
In the evaluation, the inverse of the measured RRC was calculated and expressed as an index where the inverse of the RRC in Comparative Example 1 was 100. A larger index value indicates better rolling resistance (i.e. greater reduction in rolling resistance). The evaluation results are shown in Table 2.

(2) Pass-by noise level

For each tire sample, the pass-by noise (dB) was measured in accordance with international standards (ECE R117).
In the evaluation, the difference in noise level from the pass-by noise (dB) in Comparative Example 1 was calculated and taken to be a pass-by noise level. A lower pass-by noise level indicates greater reduction in pass-by noise. The evaluation results are shown in Table 2.

[Table 2]

| | | Comparative Example 1 | Comparative Example 2 | Example 1 | Example 2 |
|---|---|---|---|---|---|
| Base rubber | Rubber composition for base rubber | A | B | C | C |
| | $0°C\tan\delta$ | 0.172 | 0.644 | 0.457 | 0.457 |
| | $30°C\tan\delta$ | 0.073 | 0.227 | 0.137 | 0.137 |
| | $0°C\tan\delta/30°C\tan\delta$ | 2.37 | 2.83 | 3.33 | 3.33 |
| | Thickness in tire radial direction | 2mm | 2mm | 2mm | 1mm |

(continued)

|  |  | Comparative Example 1 | Comparative Example 2 | Example 1 | Example 2 |
|---|---|---|---|---|---|
| Evaluation | Rolling resistance (larger value is better) | 100 | 96 | 101 | 98 |
| | Pass-by noise level (smaller value is better) | Reference value | -0.9dB | -0.7dB | -0.2dB |

As can be understood from the results in Table 2, the sample of each Example exhibited excellent effects in both rolling resistance and pass-by noise level in a balanced manner, as compared with the sample of each Comparative Example.

The sample of each Comparative Example was inferior in at least one evaluation item to the sample of Example 1.

<Examples 3 to 5>

Samples of passenger vehicle pneumatic radial tires of 195/65R15 in size were produced using, in the base rubbers of their tread portions, the foregoing rubber composition for base rubber C. The conditions of the tread portion other than the thickness of the base rubber shown in Table 3 were the same in all samples.

The thickness of the base rubber in the tire radial direction in each sample is as follow:

Example 3: uniform thickness (1.5 mm).
Example 4: thinner in the center portion (CL) in the tire width direction (i.e. tire widthwise center portion) (1.0 mm) and thicker in the outer edge (edge on the shoulder portion side) in the tire width direction (i.e. tire widthwise outer edge) (2.0 mm).
Example 5: thicker in the center portion (CL) in the tire width direction (2.0 mm) and thinner in the outer edge (edge on the shoulder portion side) in the tire width direction (1.0 mm).

<Evaluation>

For each produced tire sample, the pass-by noise (dB) was measured in accordance with international standards (ECE R117). In the evaluation, the difference in noise level from the pass-by noise (dB) in the foregoing Comparative Example 1 was calculated and taken to be a pass-by noise level. A lower pass-by noise level indicates greater reduction in pass-by noise. The evaluation results are shown in Table 3.

[Table 3]

|  |  | Example 3 | Example 4 | Example 5 |
|---|---|---|---|---|
| Base rubber | Rubber composition for base rubber | C | C | C |
| | $0°C\tan\delta/30°C\tan\delta$ | 3.33 | 3.33 | 3.33 |
| | Thickness in tire radial direction in tire widthwise center portion | 1.5mm | 1.0mm | 2.0mm |
| | Thickness in tire radial direction in tire widthwise outer edge | 1.5mm | 2.0mm | 1.0mm |
| Evaluation | Pass-by noise level (smaller value is better) | -0.4dB | -0.5dB | -1.0dB |

As can be understood from the results in Table 3, the pass-by noise level improving effect was higher when the thickness of the base rubber was varied. In particular, the pass-by noise level improving effect was higher when the base rubber was thicker in the center portion than on the shoulder portion side in the tire width direction.

INDUSTRIAL APPLICABILITY

It is thus possible to provide a tire having excellent rolling resistance and improved pass-by noise performance.

**Claims**

1. A tire comprising

   a tread portion that includes a base rubber and a cap rubber located on an outer side of the base rubber in a tire radial direction,
   wherein a thickness of the base rubber in the tire radial direction is 1 mm or more, 30 °C tan$\delta$ of the base rubber is 0.20 or less, and a ratio 0 °C tan$\delta$/30 °C tan$\delta$ of 0 °C tan$\delta$ to 30 °C tan$\delta$ of the base rubber is 2.90 or more, where the 30 °C tan$\delta$ is tan$\delta$ at 10 Hz and 30 °C, and the 0 °C tan$\delta$ is tan$\delta$ at 10 Hz and 0 °C, and
   wherein a rectangular rate of a contact patch shape when the tire is attached to an applicable rim, filled to a prescribed internal pressure, and placed under a maximum load in a state in which a tire rotation axis is parallel to a contact patch is 70 % to 95 %, and
   wherein the rectangular rate of the contact patch shape of the tread portion is calculated according to the following equation:

   $$\text{rectangular rate of contact patch shape } (\%) = 100 \times ((La + Lb)/2)/Lc$$

   where Lc is the contact patch length in the part corresponding to the tire equatorial plane (CL) and La and Lb are the contact patch lengths at the left and right positions of 80 % of the contact patch shape maximum width (Wmax) with respect to the tire equatorial plane (CL).

2. The tire according to claim 1, wherein the ratio 0 °C tan$\delta$/30 °C tan$\delta$ is 3.00 or more.

3. The tire according to claim 1 or 2, wherein the 30 °C tan$\delta$ is 0.075 or more.

4. The tire according to any one of claims 1 to 3, wherein the 0 °C tan$\delta$ is 0.200 to 0.625.

5. The tire according to any one of claims 1 to 4, wherein the thickness of the base rubber in the tire radial direction is greater in a center portion than in an outer side portion in a tire width direction.


**Patentansprüche**

1. Reifen, der Folgendes umfasst:

   einen Laufflächenabschnitt, der einen Basisgummi und einen Deckgummi einschließt, der auf einer Außenseite des Basisgummis in einer radialen Richtung des Reifens angeordnet ist,
   wobei eine Dicke des Basisgummis in der radialen Richtung des Reifens 1 mm oder mehr beträgt, 30 °C tan$\delta$ des Basisgummis 0,20 oder weniger beträgt und ein Verhältnis 0 °C tan$\delta$/30 °C tan$\delta$ von 0 °C tan$\delta$ zu 30 °C tan$\delta$ des Basisgummis 2,90 oder mehr beträgt, wobei 30 °C tan$\delta$ tan$\delta$ bei 10 Hz und 30 °C ist und 0 °C tan$\delta$ tan$\delta$ bei 10 Hz und 0 °C ist, und
   wobei eine rechteckige Rate einer Aufstandsflächenform, wenn der Reifen an einer anwendbaren Felge angebracht ist, bis zu einem vorgeschriebenen Innendruck gefüllt und unter eine maximale Last in einem Zustand gesetzt ist, in dem eine Reifendrehachse parallel zu einer Aufstandsfläche ist, 70 % bis 95 % beträgt, und
   wobei die rechteckige Rate der Aufstandsflächenform des Laufflächenabschnitts nach der folgenden Gleichung berechnet wird:

   $$\text{rechteckige Rate der Aufstandsflächenform } (\%) = 100 \text{ x } ((La + Lb)/2)/Lc,$$

   wobei Lc die Länge der Aufstandsfläche in dem Teil ist, der der Äquatorebene (CL) des Reifens entspricht, und La und Lb die Längen der Aufstandsfläche an der linken und rechten Position von 80 % der maximalen Breite der Aufstandsflächenform (Wmax) in Bezug auf die Äquatorebene (CL) des Reifens sind.

2. Reifen nach Anspruch 1, wobei das Verhältnis 0 °C tan$\delta$/30 °C tan$\delta$ 3,00 oder mehr beträgt.

3. Reifen nach Anspruch 1 oder 2, wobei der 30 °C tan$\delta$ 0,075 oder mehr beträgt.

4. Reifen nach einem der Ansprüche 1 bis 3, wobei der 0 °C tan$\delta$ 0,200 bis 0,625 beträgt.

5. Reifen nach einem der Ansprüche 1 bis 4, wobei die Dicke des Basisgummis in der radialen Richtung des Reifens in einem mittleren Abschnitt größer ist als in einem äußeren Seitenabschnitt in einer Richtung der Reifenbreite.

**Revendications**

1. Bandage pneumatique comprenant

une partie de bande de roulement qui inclut un caoutchouc de base et un caoutchouc de protection situé sur un côté extérieur du caoutchouc de base dans une direction radiale du bandage pneumatique, dans lequel une épaisseur du caoutchouc de base dans la direction radiale du bandage pneumatique est de 1 mm ou plus, le tan$\delta$ à 30 °C du caoutchouc de base est de 0,20 ou moins, et un rapport tan$\delta$ à 0 °C/tan$\delta$ à 30 °C du tan$\delta$ à 0 °C au tan$\delta$ à 30 °C du caoutchouc de base est de 2,90 ou plus, où le tan$\delta$ à 30 °C est le tan$\delta$ à 10 Hz et à 30 °C, et le tan$\delta$ à 0 °C est le tan$\delta$ à 10 Hz et à 0 °C, et dans lequel un taux rectangulaire d'une forme de surface de contact lorsque le bandage pneumatique est fixé à une jante applicable, rempli à une pression interne prescrite et placé sous une charge maximale dans un état dans lequel un axe de rotation du bandage pneumatique est parallèle à une surface de contact est de 70 % à 95 %, et dans lequel le taux rectangulaire de la forme de surface de contact de la bande de roulement est calculé selon l'équation suivante :

$$\text{taux rectangulaire de forme de surface de contact (en \%)} = 100 \times ((La + Lb)/2)/Lc,$$

où Lc est la longueur de surface de contact dans la partie correspondant au plan équatorial du bandage pneumatique (CL) et La et Lb sont les longueurs de surface de contact aux positions gauche et droite de 80 % de la largeur maximale de forme de la surface de contact (Wmax) par rapport au plan équatorial du bandage pneumatique (CL).

2. Bandage pneumatique selon la revendication 1, dans lequel le rapport tanô à 0 °C/tan$\delta$ à 30 °C est égal ou supérieur à 3,00.

3. Bandage pneumatique selon la revendication 1 ou 2, dans lequel le tan$\delta$ à 30 °C est égal ou supérieur à 0,075.

4. Bandage pneumatique selon l'une quelconque des revendications 1 à 3, dans lequel le tan$\delta$ à 0 °C est de 0,200 à 0,625.

5. Bandage pneumatique selon l'une quelconque des revendications 1 à 4, dans lequel l'épaisseur du caoutchouc de base dans la direction radiale du bandage pneumatique est plus importante dans une partie centrale que dans une partie latérale extérieure dans une direction de la largeur du bandage pneumatique.

# FIG. 1

**REFERENCES CITED IN THE DESCRIPTION**

**Patent documents cited in the description**

- JP 2016006135 A
- EP 3812174 A1
- EP 2698262 A1
- US 2008097024 A1
- WO 2019039175 A1